# EUROPEAN PATENT APPLICATION

(11) **EP 1 193 195 A2**
(43) Date of publication of application: **03.04.2002**
(21) Application number: 01203512.7
(22) Date of filing: 17.09.2001
(51) Int. Cl.: B65G 1/04

(54) **Cellular warehouse with facilitated load unit handling**

(30) Priority: 27.09.2000 IT MI002094
(71) Applicant: Fata Handling S.p.A., 81020 S.Marco Evangelista (Caserta) (IT)
(72) Inventor: Patrito, Donato, 10040 Leini (Torino) (IT)
(74) Representative: Faraggiana, Vittorio, Dr. Ing.

(57) **Abstract**

A warehouse (10) has a plurality of cells (11) arranged in rows and columns. In each cell is received a plurality of load units (12) aligned in a row directed towards an input-output mouth of the cell to have the first load unit of each row, which represents the head of the row, arranged near the mouth of the respective cell. At least one deposit-withdrawal shuttle (13) moves along the cell mouths and has handling means (22) for taking and depositing load units at the head of the rows. The load units (12) in each row are connected sequentially to each other with mutual coupling means (17) to move together towards the cell mouth when the shuttle withdraws the leading load unit of the row The coupling means between the withdrawn unit and the immediately following one in the row are releasable on command during the withdrawal to free the withdrawn load unit from the row after the withdrawal movement has moved the second unit of the row near the cell mouth.

## Description

The present invention relates to a warehouse of the type comprising rows and columns of cells which receive load units and between which run shuttles for deposit and withdrawal of said load units.

In the prior art the accomplishment of cells each containing a plurality of load units aligned to appear sequentially one at a time at the mouth of the cell is quite complicated. Traversing mechanisms moving the load units of the row on command are usually required to place the first load unit at the cell mouth in such a manner that the withdrawal shuttle can grasp the load unit and withdraw it from the cell. On the contrary, when it is necessary to deposit a load unit in a cell, traversing mechanisms must first move all the load units which are already in the cell to remove them from the mouth in such a manner as to make room for the load unit which is then inserted.

As the cells in a warehouse are very numerous and many load units can be received in each cell, the complication, number of component parts and cost of traversing means for the load units in the cells are readily imaginable. The complication of the traversing means is still greater when the load units are used for storing heavy products such as for example automotive vehicle parts or entire bodies.

The general purpose of the present invention is to remedy the above mentioned shortcomings by making available a generic warehouse of the above mentioned type but with no need of complicated traversing systems for the load units inside the cells and which would thus make possible reduced construction and maintenance costs as well as ease of construction, modification and expansion.

In view of this purpose it was sought to provide in accordance with the present invention a warehouse having a plurality of cells arranged in rows and columns with there being received in each cell a plurality of load units aligned in a row directed towards an input-output mouth of the cell to have the first load unit of each row, which is the head of the row, located next to the mouth of the respective cell with at least one deposit-withdrawal shuttle moving along the cell mouths and having handling means for taking and depositing load units at the row heads characterized in that the load units in each row are connected sequentially to each other with mutual coupling means to move together towards the cell mouth when the shuttle withdraws the load unit at the head of the row with the coupling means between the withdrawn unit and the immediately following one in the row being releasable on command during the withdrawal to free the withdrawn load unit from the row.

To clarify the explanation of the innovative principles of the present invention and its advantages compared with the prior art there is described below with the aid of the annexed drawings a possible embodiment thereof by way of non-limiting example applying said principles. In the drawings:
- FIG 1 shows a diagrammatic perspective view of a warehouse in accordance with the present invention,
- FIG 2 shows a partial diagrammatic side view of the warehouse of FIG 1,
- FIG 3 shows a front view along plane of cut III-III of FIG 2,
- FIG 4 shows a diagrammatic plan view of a loading & unloading shuttle of the warehouse of FIG 1,
- FIG 5 shows a diagrammatic plan view of a pair of load units or pallets of the warehouse of FIG 1,
- FIG 6 shows a diagrammatic longitudinal cross section view of mutual coupling members for aligned pallets, and
- FIG 7 shows an operating sequence of the warehouse in accordance with the present invention.

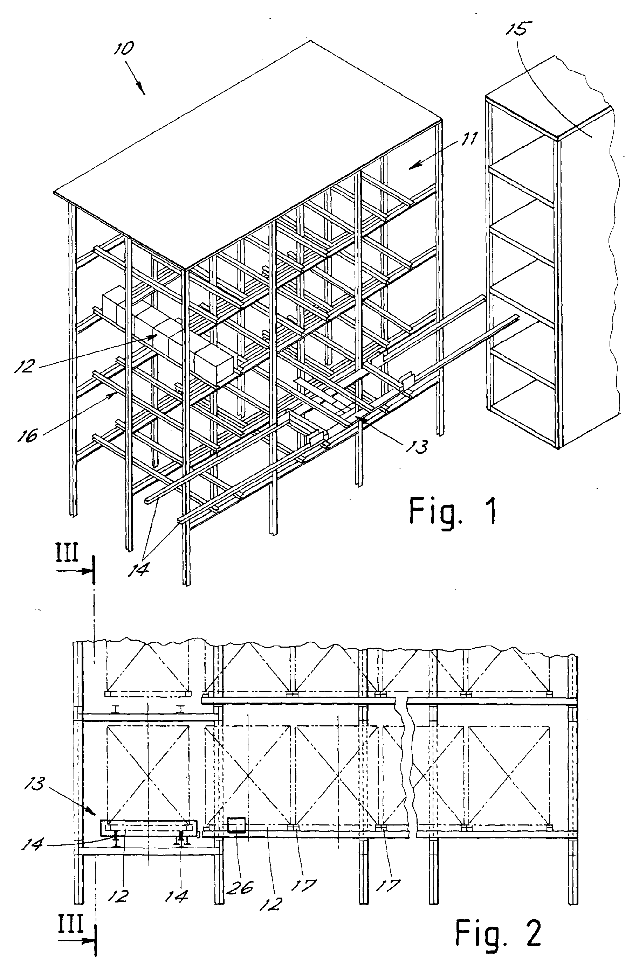

With reference to the figures, FIG 1 shows diagrammatically a warehouse designated as a whole by reference number 10 of the type having a plurality of cells 11 arranged in rows and columns for example with a reticulate structure.

In each cell is received a plurality of load units 12 each carrying a product to be stored and aligned in a row directed towards an input-output mouth of the cell to have the first load unit of each row at the row head located next to the mouth of the respective cell.

For simplicity the figure shows a single occupied cell.

Along the cell mouths moves at least one shuttle 13 for deposit-withdrawal of load units in the cells. Typically the shuttles (only one is shown for clarity) can be more than one and run along fixed tracks 14 at the ends of which there are lifts 15 which move the load units or the entire shuttle from one story to the other of the warehouse.

In the cells there are tracks 16 on which run the load units equipped with purposeful rollers. The shuttle comprises in turn tracks 27 which align with the running tracks of a selected cell from which to withdraw or in which to insert a load unit.

A partial view of the warehouse taken longitudinally to the extension of the cells is shown in FIG 2. The load units in each row are connected sequentially to each other by mutual coupling means 17 to form a load unit train and move together towards the mouth of the cell when the shuttle withdraws the load unit at the head of the row.

Advantageously, to avoid undesired running of the load units there are brakes 26 which normally hold the load unit rows stopped in the cell. These brakes can for example act on the first load unit of the row and be released by the shuttle, for example by means of the same movement of the telescopic device so as to ensure free movement of the load unit row only during loading and unloading.

As clarified below the coupling means 17 between the unit withdrawn and the immediately following one in the row are releasable on command during the withdrawal to free the withdrawn load unit from the row and allow its free loading on the shuttle. Contrariwise, when a shuttle inserts a load unit in the cell the shuttle with the inserted load unit pushes the entire row of load units in the cell and the load unit just inserted is constrained to the load unit at the head of the row to become part of the unbroken row.

Advantageously the coupling means between the load units are passive, i.e. without actuators, and releasable simply by moving the load unit in a predetermined direction different from the direction of withdrawal from the cell.

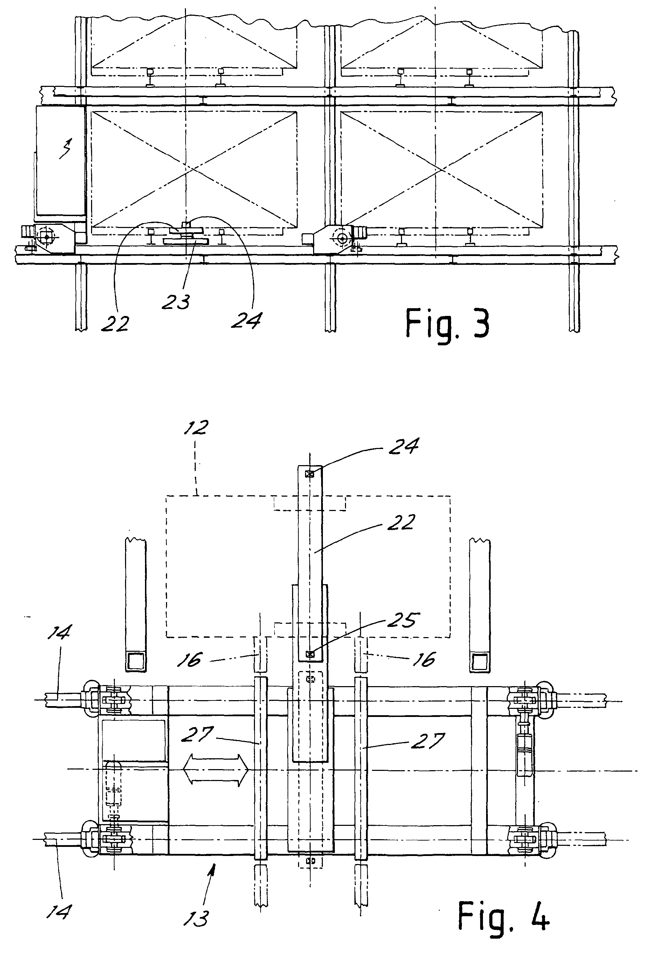

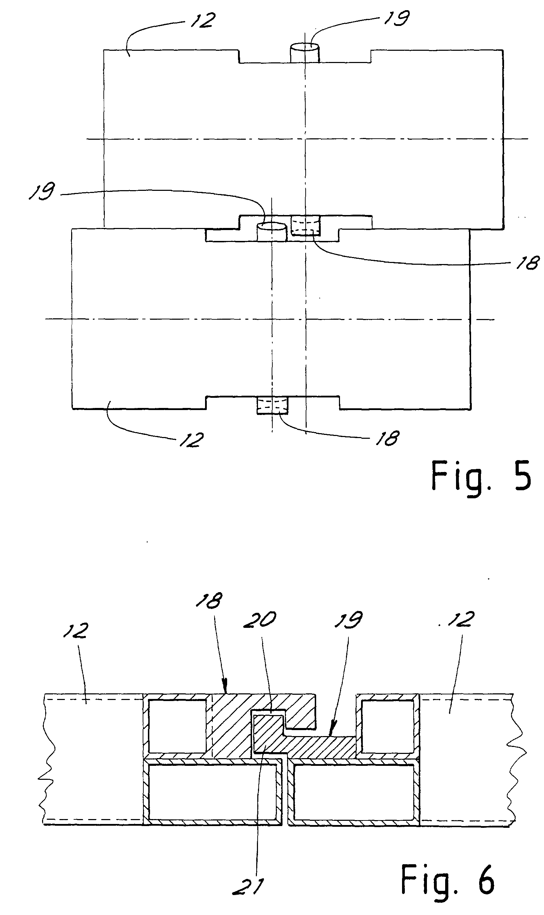

For example, it was found particularly advantageous that the predetermined release direction coincide with the running direction of the shuttle along the cell mouths (in the direction of the arrow in FIG 4) so as to use the powered movement of the shuttle without added actuators. FIG 5 shows diagrammatically a plan view of two load units in coupling or release position so as to show an advantageous construction of the coupling means 17. As may be seen in FIG 5 and in FIG 6 in cross section, the coupling means comprise a female part 18 on a leading or trailing end of the load unit and a corresponding male part 19 on the other end of the load unit. In this manner each of the load units aligned in a row in a cell presents its male coupling part to the corresponding female coupling part of the neighboring unit and vice versa.

As may be seen in FIG 6, in the preferred embodiment the female part identifies a channel 20 directed transversely to the load unit to receive in a sliding manner a complementary end 21 of the male part 19 of the other load unit.

As may be seen in FIGS 3 and 4 the means located on the shuttle for moving the load units comprise a telescopic device 22 powered to emerge (position in solid lines in FIG 4) and reenter (position in broken lines in FIG 4) laterally to the shuttle in a direction parallel to the rows of load units in the cells so as to reach and couple with the leading load unit (shown in broken lines in FIG 4) in a cell in front of which the shuttle has stopped.

As shown diagrammatically in FIG 3 the telescopic device is arranged to be inserted under the load unit to be taken and is equipped with controlled means for engagement in the load unit to pull it into and out of the cell. In the embodiment shown the controlled engagement means advantageously comprise means 23 for lifting the telescopic device 22 towards the bottom of the load unit so as to engage a tooth 24 or a tooth 25 against the leading or trailing edge of the load unit.

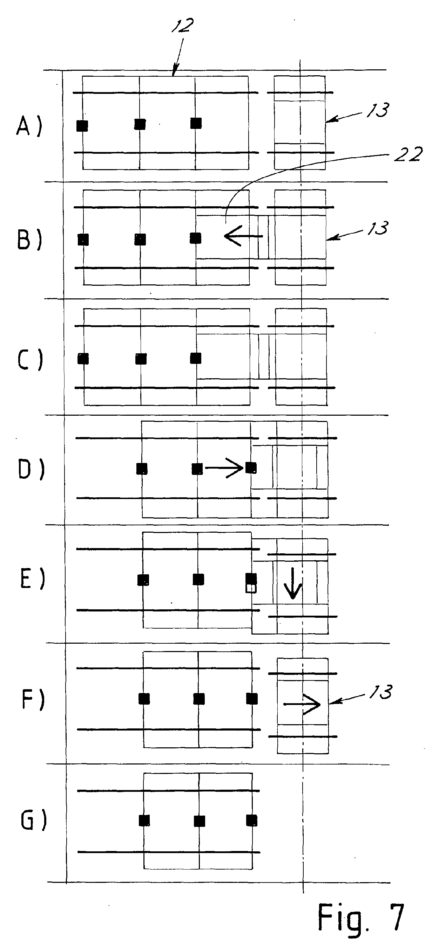

FIG 7 shows a warehouse loading and unloading sequence.

The sequence begins with the shuttle aligned with the cell involved in the operation (FIG 7A). Then the shuttle extends the telescopic device to place it under the first load unit (FIG 7B) and engages the load unit (FIG 7C). The telescopic device is then partially withdrawn to pull the entire row towards the cell outlet (FIG 7D). When the second load unit is in the position next to the cell mouth where the first load unit was initially, the shuttle performs the movement of uncoupling of the first load unit from the row (FIG 7E) and the telescopic device can complete the second part of its travel to bring the first load unit completely onto the shuttle (FIG 7F). At this point the shuttle can withdraw from the cell to take the load unit towards the warehouse outlet (FIG 7G).

It is clear that insertion of a load unit in a cell takes place with a sequence of operations in reverse of that shown in FIG 7.

From the description just given it is seen that it is advantageous for the telescopic device to have an actuator structured in such a manner that movement of the telescopic device is divided in two steps, first a movement part for partial extraction performed by pulling the entire row towards the mouth with the hooked load unit and second a total withdrawal movement part performed after the mutual coupling means between the leading load unit and the next load unit have been released to pull only the hooked load unit onto the shuttle.

It is now clear that the predetermined purposes have been achieved by making available a warehouse in which the entire structure of cells need not be equipped with handling means for the load units in the cells but where all handling is concentrated in the shuttle or shuttles with a considerable saving and simplification of construction and operations.

Naturally the above description of an embodiment applying the innovative principles of the present invention is given by way of non-limiting example of said principles within the scope of the exclusive right claimed here. For example the entire warehouse can be built symmetrically on the two sides of the shuttle running aisle so that the same shuttle can serve cells on both sides. The telescopic device would be designed to enable projection on command from either side of the shuttle.

The direction of movement of coupling and uncoupling between the load units can be different from that shown.

For example by appropriate design of the coupling means the load units could be uncoupled by lifting the first unit in the row.

The warehouse could have a single floor and the lifts between floors could be eliminated since no longer needed.

## Claims

1. A warehouse having a plurality of cells (11) arranged in rows and columns with there being received in each cell a plurality of load units (12) aligned in a row directed towards an input-output mouth of the cell to have the first load unit of each row, which represents the head of the row, arranged near the mouth of the respective cell with at least one deposit-withdrawal shuttle (13) moving along the cell mouths and having handling means (22) for taking and depositing load units at the row heads **characterized in that** the load units in each row are connected sequentially to each other with mutual coupling means (17) to move together towards the cell mouth when the shuttle (13) withdraws the leading load unit of the row with the coupling means (17) between the withdrawn unit and the immediately following one in the row being releasable on command during the withdrawal to free the withdrawn load unit from the row.

2. Warehouse in accordance with claim 1 **characterized in that** the coupling means between load units are passive coupling means (17) releasable by the movement of the load unit in a predetermined direction different from the direction of withdrawal from the cell.

3. Warehouse in accordance with claim 2 **characterized in that** the above mentioned predetermined direction is a running direction of the shuttle along the cell mouths.

4. Warehouse in accordance with claim 1 **characterized in that** the handling means on the shuttle comprise a telescopic device (22) powered for emerging from and reentering the cells laterally to the shuttle in a direction parallel to the load unit rows to reach and hook the leading load unit in a cell before which the shuttle stops.

5. Warehouse in accordance with claim 4 **characterized in that** the movement of the telescopic device (22) is divided in two parts with a first part of partial withdrawal movement performed by pulling the entire row towards the mouth with the load unit hooked and a second total withdrawal movement performed after the mutual coupling means between the leading load unit and the following load unit have been released and pulling only the hooked load unit onto the shuttle.

6. Warehouse in accordance with claim 5 **characterized in that** the coupling means between load units are passive coupling means (17) releasable by the movement of the load unit in a predetermined direction different from the direction of withdrawal from the cell and that between the first and second movement parts the shuttle is moved in said predetermined direction to bring about disengagement of the mutual coupling means.

7. Warehouse in accordance with claim 4 **characterized in that** the telescopic device is arranged to be inserted under the load unit to be withdrawn and is equipped with controlled means for engagement in the load unit to pull it into and out of the cell.

8. Warehouse in accordance with claim 7 **characterized in that** the controlled engagement means comprise means (23) for lifting the telescopic device towards the bottom of the load unit.

9. Warehouse in accordance with claim 3 **characterized in that** the coupling means comprise a female part (18) on a leading or trailing end of the load unit and a corresponding male part (19) on the other end of the load unit so that each load unit of the aligned load units in a row in a cell presents its male coupling part to the corresponding female coupling part of the next unit and vice verse.

10. Warehouse in accordance with claim 9 **characterized in that** the female part identifies a channel (20) directed transversely to the load unit to receive in a running manner a complementary end (21) of the male part (19) of the other load unit.

11. Warehouse in accordance with claim 1 **characterized in that** there are brakes (26) to normally hold the load unit rows stopped in the cells.

12. Warehouse in accordance with claim 1 **characterized in that** each cell comprises tracks (16) for running of the load unit row with the shuttle comprising in turn tracks (27) which align with the running tracks (16) of a selected cell from which a load unit is to be withdrawn or into which a load unit is to be inserted.

13. Warehouse in accordance with claim 1 **characterized in that** the shuttle runs on tracks (14) arranged parallel to the cell mouths with there being at least one end of the tracks a lift (15) for moving the shuttle or the load between warehouse floors.
